# EUROPÄISCHE PATENTSCHRIFT

(11) **EP 0 761 624 B1**
(45) Veröffentlichungstag und Bekanntmachung des Hinweises auf die Patenterteilung: **24.11.1999**
(21) Anmeldenummer: 96110726.5
(22) Anmeldetag: 03.07.1996
(51) Int. Cl.: C04B 41/46, C04B 41/50

(54) **Verfahren zum Einfärben von Speckstein**
Method of colouring soapstone
Procédé pour colorer de la stéatite

(30) Priorität: 29.08.1995 DE 19531725
(43) Veröffentlichungstag der Anmeldung: 12.03.1997
(73) Patentinhaber: Hock, Hans-Joachim, 67098 Bad Dürkheim (DE)
(72) Erfinder: Hock, Hans-Joachim, 67098 Bad Dürkheim (DE)
(74) Vertreter: KEIL & SCHAAFHAUSEN

(56) Entgegenhaltungen:
- GB-A- 1 055 745
- US-A- 3 092 836
- US-A- 3 704 159
- CHEMICAL ABSTRACTS, vol. 115, no. 24, 16.Dezember 1991 Columbus, Ohio, US; abstract no. 262078v, XP000285601 & JP 03 174 377 A (OFUDEKKU K.K.) 29.Juli 1991
- CHEMICAL ABSTRACTS, vol. 109, no. 4, 25.Juli 1988 Columbus, Ohio, US; abstract no. 26759y, XP000158611 & CN 109 535 A (QUIQUIHAER LIGHT INDUSTRY COLLEGE) 14.Januar 1987
- DATABASE WPI Section Ch, Week 7848 Derwent Publications Ltd., London, GB; Class L02, AN 78-87281A XP002021398 & SU 588 213 A (MINERAL SYNTHESIS) , 16.Februar 1978
- DATABASE WPI Section Ch, Week 8712 Derwent Publications Ltd., London, GB; Class L02, AN 87-082282 XP002021399 & JP 61 295 286 A (IN S) , 26.Dezember 1986

## Beschreibung

Die Erfindung bezieht sich auf ein Verfahren zum Einfärben von Ofen- bzw. Kaminbausteinen aus Speckstein.

Speckstein eignet sich wegen seiner hohen Wärmeleitfähigkeit und Wärmekapazität besonders gut als feuerfeste Formkörper für den Bau von Öfen und Kaminen, insbesondere auch im Wohnbereich. Die heute wirtschaftlich Zugänglichen Lagerstätten von Speckstein, z.B. in Finnland, haben jedoch eine gräuliche, relativ triste Farbe.

Aus der US-A-3 092 836 ist lediglich ein Verfahren zum Einfärben von Natursteinkörpern aus Mamor, Granit oder Kalkstein durch Eintauchen in eine Phthalocyanin-Pigmententhaltende Lösung bekannt, welche bspw. von 50°C bis zum Siedpunkt erhitzt wird, um eine Färbung zu erreichen. Hieraus ergibt sich nicht, ob die mit dem Phthalocyanin-Farbstoff eingefärbten Steine für den Ofen- bzw. Kaminbau geeignet sind, wo hohe Temperaturbeanspruchungen gefordert werden.

Aus der JP-A-61 295 286 ist ein Verfahren zum Einfärben von Naturstein bekannt, bei welchem dieser auf lediglich 75 bis 80°C für 30 bis 40 Minuten in einer Pigmentfarblösung behandelt und dann einer Temperatur von 125 bis 140°C ausgesetzt wird. Eine Einfärbbarkeit von Speckstein-Formkörpern und eine Temperaturbeständigkeit solchermaßen eingefärbter Specksteine ergibt sich hieraus nicht.

Aus der JP-A-03 174 277 ist es an sich bekannt, einen Stein in einem abgeschlossenen Vakuumbehälter zu entgasen, dann in dem Behälter mit einer ein Färbemittel enthaltenden Lösung zu imprägnieren und den Druck in dem Behälter auf 2 bis 50 atm zu erhöhen, um das Färbemittel in den Stein hineinzudrücken. Eine Anwendbarkeit dieses Verfahrens auf temperaturbeständig eingefärbte Speckstein-Formkörper ergibt sich hieraus nicht.

Aufgabe der vorliegenden Erfindung ist es, ein Verfahren zum Einfärben von Ofen- bzw. Kaminbausteinen aus Speckstein vorzuschlagen, mit welchem dem Speckstein-Formkörper gefälligere Farbbilder gegeben werden können, welche den in einem Ofen bzw. in einem Kamin herrschenden Temperaturen im Dauerbetrieb standhalten und bei welchen zwar die Ausgangsfarbe des Specksteins verändert, die interessante Specksteinstruktur jedoch erhalten bleibt.

Diese Aufgabe wird bei einem Verfahren der eingangs genannten Art im wesentlichen durch folgende Verfahrensschritte gelöst:
a) Herstellen eines Steinkörpers in der für die Anwendung bestimmten Form, z.B. in Quader- oder Plattenform,
b) Kochen des Steinkörpers in einem Einfärbebad, enthaltend einen temperaturbeständigen anionischen Farbstoff, einen temperaturbeständigen kathionischen Farbstoff, einen temperaturbeständigen Pigmentfarbstoff und/oder ein temperaturbeständiges Farbmetallsalz, bei einer Temperatur von wenigstens etwa 100°C,
c) Abspülen des im Einfärbebad behandelten Steinkörpers, und
d) Trocknen des abgespülten Steinkörpers.

Das Kochen des Steinkörpers in dem Einfärbebad kann mehrere Stunden in Anspruch nehmen. Dabei entsteht trotz der hohen Dichte des Specksteins überraschenderweise eine lichtbeständige, temperaturstabile und wischfeste Oberfläche, deren Farbbild auch bei Dauerbetrieb eines Ofens oder Kamins nicht beeinträchtigt wird.

Um das Eindringen des Farbstoffes in die Steinoberfläche noch zu verbessern, kann die Behandlung des Steinkörpers in dem Einfärbebad unter Anwendung erhöhten Druckes erfolgen.

Als besonders geeignet für das Einfärben von Speckstein haben sich Thiazin-Farbstoffe erwiesen.

Es ist ferner bei der Ausführung des Einfärbens in Einfärbebad von Vorteil, wenn letzteres ein Netzmittel, z.B. ein Tensid, enthält.

Dem Einfärbebad kann auch ein Temperaturstabilisator für den Farbstoff zugegeben werden, welcher mit in die Oberfläche des Speckstein-Formkörpers eindringt und das Farbbild stabilisiert.

Mit der Erfindung wird ferner vorgeschlagen, dem Einfärbebad auch ein Passivierungsadditiv zuzugeben.

Bei einer weiteren Ausgestaltung der Erfindung kann der eingefärbte, abgespülte und getrocknete Steinkörper bei erhöhter Temperatur von z.B. ca 500 °C gebrannt werden, um das Farbbild vor dem Einbau der Specksteine in den Ofen bzw. Kamin weiter zu stabilisieren.

Ferner kann die Oberfläche des eingefärbten, abgespülten und getrockneten sowie ggf. gebrannten Steinkörpers mit einem temperaturbeständigen Lack, vorzugsweise einem Klarsichtlack versehen werden. Auf diese Weise kann das Aussehen des mit erfindungsgemäß eingefärbten Specksteinen gebauten Ofens bzw. Kamins noch weiter verbessert werden. Der Lack kann auch dem Oberflächenschutz dienen.

## Patentansprüche

1. Verfahren zum Einfärben von Ofen- bzw. Kaminbausteinen aus Speckstein mit folgenden Verfahrensschritten:
a) Herstellen eines Steinkörpers in der für die Anwendung bestimmten Form, z.B. in Qader- oder Plattenform,
b) Kochen des Steinkörpers in einem Einfärbebad, enthaltend einen temperaturbeständigen anionischen Farbstoff, einen temperaturbeständigen kathionischen Farbstoff, einen temperaturbeständigen Pigmentfarbstoff und/oder ein temperaturbeständiges Farbmetallsalz, bei einer Temperatur von wenigstens etwa 100°C,
c) Abspülen des im Einfärbebad behandelten Steinkörpers, und
d) Trocknen des abgespülten Steinkörpers.

2. Verfahren nach Anspruch 1, **dadurch gekennzeichnet**, daß die Behandlung des Steinkörpers in dem Einfärbebad unter Anwendung erhöhten Druckes erfolgt.

3. Verfahren nach Anspruch 1 oder 2, **dadurch gekennzeichnet**, daß das Einfärbebad einen Thiazin-Farbstoff enthält.

4. Verfahren nach einem der Ansprüche 1 bis 3, **dadurch gekennzeichnet**, daß das Einfärbebad ein Netzmittel, z.B. ein Tensid enthält.

5. Verfahren nach einem der Ansprüche 1 bis 4, **dadurch gekennzeichnet**, daß das Einfärbebad einen Temperaturstabilisator für den Farbstoff enthält.

6. Verfahren nach einem der Ansprüche 1 bis 5, **dadurch gekennzeichnet**, daß das Einfärbebad ein Passivierungsadditiv enthält.

7. Verfahren nach einem der Ansprüche 1 bis 6, **dadurch gekennzeichnet**, daß das Einfärbebad einen Lichtstabilisator für den Farbstoff enthält.

8. Verfahren nach einem der Ansprüche 1 bis 7, **dadurch gekennzeichnet**, daß der eingefärbte, abgespülte und getrocknete Steinkörper bei erhöhter Temperatur von z.B. 500 °C gebrannt wird.

9. Verfahren nach einem der Ansprüche 1 bis 8, **dadurch gekennzeichnet**, daß die Oberfläche des eingefärbten, gespülten und getrockneten sowie ggf. gebrannten Steinkörpers mit einem temperaturbeständigen Lack versehen wird.

## Claims

1. Process for colouring furnace or flue building stones of soapstone with the following process steps:
a) production of a stone body in the form suitable for use, e.g cuboid or plate-like,
b) boiling of the stone body in a colouring bath containing a temperature-resistant anionic dye, a temperature-resistant cationic dye, a temperature-resistant pigment dye and/or a temperature-resistant coloured metal salt, at a temperature of at least approximately 100°C,
c) rinsing of the stone body treated in the colouring bath, and
d) drying of the rinsed stone body.

2. Process according to claim 1, characterised in that the stone body is treated in the colouring bath under the use of increased pressure.

3. Process according to claim 1 or 2, characterised in that the colouring bath contains a thiazine dye.

4. Process according to any of claims 1 to 3, characterised in that the colouring bath contains a wetting agent, e.g. a tenside.

5. Process according to any of claims 1 to 4, characterised in that the colouring bath contains a temperature stabiliser for the dye.

6. Process according to any of claims 1 to 5, characterised in that the colouring bath contains a passivation additive.

7. Process according to any of claims 1 to 6, characterised in that the colouring bath contains a light stabiliser for the dye.

8. Process according to any of claims 1 to 7, characterised in that the coloured, rinsed and dried stone body is calcined at high temperature, e.g. 500°C.

9. Process according to any of claims 1 to 8, characterised in that the surface of the coloured, rinsed and dried and where applicable calcined stone body is given a temperature-resistant lacquer.

## Revendications

1. Procédé pour colorer des pierres en stéatite pour four ou cheminée, comprenant les étapes de procédé suivantes :
a) fabrication d'un corps de pierre dans le moule correspondant à l'application, par exemple dans un moule pour pierre de taille ou dans un moule pour plaque,
b) cuisson du corps de pierre dans un bain de coloration, comportant un colorant anionique résistant à la température, un colorant cationique résistant à la température, un pigment résistant à la température et/ou un sel métallique coloré résistant à la température, à une température au moins égale à environ 100 °C,
c) lavage du corps de pierre traité dans le bain de coloration, et
d) séchage du corps de pierre lavé.

2. Procédé selon la revendication 1, caractérisé en ce que le traitement du corps de pierre se fait dans le bain de coloration en utilisant une pression élevée.

3. Procédé selon la revendication 1 ou 2, caractérisé en ce que le bain de coloration comporte un colorant de thiazine.

4. Procédé selon l'une des revendications 1 à 3, caractérisé en ce que le bain de coloration contient un agent mouillant, par exemple un tensioactif.

5. Procédé selon l'une des revendications 1 à 4, caractérisé en ce que le bain de coloration contient un stabilisateur de température pour le colorant.

6. Procédé selon l'une des revendications 1 à 5, caractérisé en ce que le bain de coloration contient un additif de passivation.

7. Procédé selon l'une des revendications 1 à 6, caractérisé en ce que le bain de coloration contient un stabilisant à la lumière pour le colorant.

8. Procédé selon l'une des revendications 1 à 7, caractérisé en ce que le corps de pierre coloré, lavé et séché est cuit à température élevée, par exemple égale à 500 °C.

9. Procédé selon l'une des revendications 1 à 8, caractérisé en ce que la surface du corps de pierre coloré, lavé et séché, ainsi qu'éventuellement cuit, est pourvue d'une laque résistant à la température.
